# EUROPEAN PATENT APPLICATION

(11) **EP 4 783 695 A1**
(43) Date of publication of application: **29.07.2026**
(21) Application number: 24870353.0
(22) Date of filing: 03.09.2024
(51) Int. Cl.: H04W 72/0453

(54) **COMMUNICATION METHOD AND APPARATUS**

(30) Priority: 28.09.2023 CN 202311290262
(71) Applicant: HUAWEI TECHNOLOGIES CO., LTD., Shenzhen, Guangdong 518129 (CN)
(72) Inventor: LI, Xiangyu, Shenzhen, Guangdong 518129 (CN); PENG, Wenjie, Shenzhen, Guangdong 518129 (CN)
(74) Representative: Maiwald GmbH
(86) International application number: PCT/CN2024/116548
(87) International publication number: WO 2025/066807

(57) **Abstract**

This application provides a communication method and apparatus, and relates to the field of communication technologies. The method includes: determining a third carrier based on M first carriers and/or N second carriers, where one of the M first carriers is a carrier corresponding to one of M QoS flows, one of the N second carriers is a carrier corresponding to one of N PC5-S messages, and M and N are positive integers; and transmitting a PC5-RRC message on the third carrier. Because the second carrier corresponding to the PC5-S message and the first carrier corresponding to the QoS flow may meet requirements of a terminal device for transmission, the third carrier determined based on the first carrier and/or the second carrier may meet requirements of the terminal device for transmission of the PC5-RRC message. Therefore, according to the foregoing solution, the carrier used for transmission of the PC5-RRC message can be properly determined, thereby improving SL communication quality.

## Description

This application claims priority to Chinese Patent Application No. 202311290262.1, filed with the China National Intellectual Property Administration on September 28, 2023 and entitled "COMMUNICATION METHOD AND APPARATUS", which is incorporated herein by reference in its entirety.

### TECHNICAL FIELD

This application relates to the field of communication technologies, and more specifically, to a communication method and apparatus.

### BACKGROUND

A link for data transmission between terminal devices over a proximity-based services communication 5 (proximity-based services communication 5, PC5) interface is referred to as a sidelink (sidelink, SL) or a direct link. Data and/or signaling are transmitted between terminal devices via radio bearers, and radio bearers used for signaling transmission on the PC5 interface may be referred to as sidelink-signaling radio bearers (signaling sidelink radio bearer, SL-SRB). The SL-SRB may carry PC5-radio resource control (PC5-radio resource control, PC5-RRC) messages and PC5-signaling (PC5-signaling, PC5-S) messages.

However, the terminal device cannot properly determine carriers used for PC5-RRC messages, and consequently SL communication quality deteriorates.

### SUMMARY

This application provides a communication method and apparatus, to properly determine a carrier used for transmission of a PC5-RRC message, and improve SL communication quality.

According to a first aspect, a communication method is provided. The method may be performed by a terminal device, may be performed by a component (for example, a processor, a chip, or a chip system) of the terminal device, or may be performed by a logical module or software that can implement all or some functions of the terminal device.

The method includes: determining a third carrier based on M first carriers and/or N second carriers, where one of the M first carriers is a carrier corresponding to one of M quality of service (quality of service, QoS) flows, one of the N second carriers is a carrier corresponding to one of N PC5-S messages, and M and N are positive integers; and transmitting a PC5-RRC message on the third carrier.

According to the foregoing solution, the third carrier corresponding to the PC5-RRC message may be determined based on the first carrier and/or the second carrier. Because the first carrier corresponding to the PC5-S message and the second carrier corresponding to the QoS flow may meet a requirement of the terminal device for transmission, the third carrier determined based on the first carrier and/or the second carrier may meet a requirement of the terminal device for transmission of the PC5-RRC message. Therefore, according to the foregoing solution, a carrier used for transmission of the PC5-RRC message can be properly determined, thereby improving SL communication quality.

With reference to the first aspect, in some implementations of the first aspect, the third carrier is a union set or an intersection set of K first carriers among the M first carriers, and 2≤K≤M; the third carrier is a union set or an intersection set of L second carriers among the N second carriers, and 2≤L≤N; or the third carrier is a union set or an intersection set of K first carriers among the M first carriers and L second carriers among the N second carriers, K≤M, L≤N, and K and L are positive integers.

According to the foregoing solution, a union set or an intersection set of the first carrier and/or the second carrier may be obtained, to determine the third carrier corresponding to the PC5-RRC message. Because the first carrier corresponding to the PC5-S message and the second carrier corresponding to the QoS flow may meet the requirement of the terminal device for transmission, the requirement of the terminal device for transmission of the PC5-RRC message may also be met based on the union set or the intersection set of the first carrier and/or the second carrier. Therefore, according to the foregoing solution, the carrier used for transmission of the PC5-RRC message can be properly determined, thereby improving the SL communication quality.

With reference to the first aspect, in some implementations of the first aspect, the third carrier is one of the M first carriers corresponding to a QoS flow that has a highest priority, a smallest packet delay budget (packet delay budget, PDB), or a smallest packet error rate (packet error rate, PER) in the M QoS flows.

A carrier corresponding to a QoS flow that has a highest priority, a smallest PDB, or a smallest PER is a carrier that can meet the requirement of the terminal device for transmission. Therefore, the third carrier can also meet the requirement of the terminal device for transmission of the PC5-RRC message. According to the foregoing solution, the carrier used for transmission of the PC5-RRC message is properly determined, thereby improving the SL communication quality.

With reference to the first aspect, in some implementations of the first aspect, the third carrier is at least one of a carrier supported by a cell in which the terminal device is located, a carrier supported by the terminal device, or a carrier supported by a peer terminal device of the terminal device.

According to the foregoing solution, the third carrier is the at least one of the carrier supported by the cell in which the terminal device is located, the carrier supported by the terminal device, or the carrier supported by the peer terminal device of the terminal device. Therefore, the third carrier can meet the requirement of the terminal device for transmission of the PC5-RRC message. According to the foregoing solution, the carrier used for transmission of the PC5-RRC message is properly determined, thereby improving the SL communication quality.

With reference to the first aspect, in some implementations of the first aspect, the method further includes: reporting information about the third carrier to a network device; and receiving first information from the network device, where the first information corresponds to a fourth carrier, and the third carrier includes the fourth carrier.

According to the foregoing solution, the terminal device sends the information about the third carrier to the network device, to help the network device configure a correct carrier for the terminal device, so that the terminal device can transmit the PC5-RRC message on the third carrier, thereby improving the SL communication quality.

With reference to the first aspect, in some implementations of the first aspect, the transmitting the PC5-RRC message on the third carrier includes: transmitting the PC5-RRC message on the fourth carrier based on the first information.

With reference to the first aspect, in some implementations of the first aspect, the method further includes: reporting second information to the network device, where the second information indicates that the information about the third carrier corresponds to the PC5-RRC message.

According to the foregoing solution, the network device may associate the information about the third carrier with the PC5-RRC message based on the second information reported by the terminal device, to help the network device configure the correct carrier for the terminal device, so that the terminal device can transmit the PC5-RRC message on the third carrier, thereby improving the SL communication quality.

With reference to the first aspect, in some implementations of the first aspect, the method further includes: receiving a first scheduling request (scheduling request, SR) configuration from the network device, where the first SR configuration is an SR configuration of a PC5-RRC message; receiving a second SR configuration from the network device, where the second SR configuration is an SR configuration of a PC5-S message, and the first SR configuration is different from the second SR configuration; and sending an SR to the network device based on the first SR configuration, where the SR is used to request the network device to deliver the first information.

According to the foregoing solution, an SR configuration of an SL-SRB3 is different from an SR configuration of another SL-SRB, so that the network device can distinguish whether the SR is for requesting a resource to transmit the PC5-RRC message or for requesting a resource to transmit the PC5-S message. In this way, the network device can schedule the transmission of the PC5-RRC message by using the correct carrier, thereby improving the SL communication quality.

According to a second aspect, a communication method is provided. The method may be performed by a network device, may be performed by a component (for example, a processor, a chip, or a chip system) of the network device, or may be performed by a logical module or software that can implement all or some functions of the network device.

The method includes: receiving information about a third carrier from a terminal device, where the third carrier is related to M first carriers and/or N second carriers, one of the M first carriers is a carrier corresponding to one of M QoS flows, one of the N second carriers is a carrier corresponding to one of N PC5-S messages, and M and N are positive integers; and sending first information to the terminal device, where the first information corresponds to a fourth carrier, the third carrier includes the fourth carrier, and the fourth carrier is used to transmit a PC5-RRC message.

According to the foregoing solution, the terminal device sends the information about the third carrier to the network device, to help the network device configure a correct carrier for the terminal device, so that the terminal device can transmit the PC5-RRC message on the third carrier, thereby improving SL communication quality.

With reference to the second aspect, in some implementations of the second aspect, the method further includes: receiving second information from the terminal device, where the second information indicates that the information about the third carrier corresponds to the PC5-RRC message.

According to the foregoing solution, the network device may associate the information about the third carrier with the PC5-RRC message based on the second information reported by the terminal device, to help the network device configure the correct carrier for the terminal device, so that the terminal device can transmit the PC5-RRC message on the third carrier, thereby improving the SL communication quality.

With reference to the second aspect, in some implementations of the second aspect, the method further includes: sending a first SR configuration to the terminal device, where the first SR configuration is an SR configuration of the PC5-RRC message; sending a second SR configuration to the terminal device, where the second SR configuration is an SR configuration of the PC5-S message, and the first SR configuration is different from the second SR configuration; and receiving an SR from the terminal device based on the first SR configuration, where the SR is used to request to deliver the first information.

According to the foregoing solution, an SR configuration of an SL-SRB3 is different from an SR configuration of another SL-SRB, so that the network device can distinguish whether the SR is for requesting a resource to transmit the PC5-RRC message or for requesting a resource to transmit the PC5-S message. In this way, the network device can schedule transmission of the PC5-RRC message by using the correct carrier, thereby improving the SL communication quality.

According to a third aspect, a communication apparatus is provided, including a processor. The processor is configured to cause, by executing a computer program or instructions, or by using a processing circuit, the communication apparatus to perform the method according to any one of the first aspect and the possible implementations of the first aspect.

In a possible implementation, the communication apparatus further includes a memory, configured to store the computer program or the instructions. Further, the processor is specifically configured to invoke and run the computer program or the computer instructions stored in the memory, to cause the processor to implement any one of the implementations of the first aspect or the second aspect.

In a possible implementation, the communication apparatus further includes a transceiver (which may also be referred to as a communication interface), and the transceiver is configured to input and/or output a signal through the communication interface. The processor is configured to control the transceiver to receive and send a signal.

According to a fourth aspect, a communication apparatus is provided, including a processing circuit (which may also be referred to as a processor) and an input/output interface (which may also be referred to as an interface circuit). The input/output interface is configured to input and/or output a signal. The processing circuit is configured to perform the method according to any one of the first aspect and the possible implementations of the first aspect, or the processing circuit is configured to perform the method according to any one of the second aspect and the possible implementations of the second aspect.

In a possible implementation, the processor is configured to communicate with another apparatus through the interface circuit, and perform the method according to the first aspect or the second aspect. There are one or more processors.

According to a fifth aspect, a communication apparatus is provided. The communication apparatus may be a terminal device, or may be a device, a module, or the like configured to perform a function of the terminal device. The communication apparatus may be a network device, or may be a device, a module, or the like configured to perform a function of the network device.

In a possible implementation, the communication apparatus may include modules or units that are in one-to-one correspondence with the methods/operations/steps/actions described in the first aspect. The module or unit may be a hardware circuit, may be software, or may be implemented by a combination of the hardware circuit and the software.

In another possible implementation, the communication apparatus may include modules or units that are in one-to-one correspondence with the methods/operations/steps/actions described in the second aspect. The module or unit may be a hardware circuit, may be software, or may be implemented by a combination of the hardware circuit and the software.

According to a sixth aspect, a computer-readable storage medium is provided. The computer-readable storage medium stores a computer program or instructions, and when the computer program or the instructions are run on a computer, the method according to any one of the first aspect and the possible implementations of the first aspect is performed, or the method according to any one of the second aspect and the possible implementations of the second aspect is performed.

According to a seventh aspect, a computer program product is provided, including a computer program or instructions. When the computer program or the instructions are run on a computer, the method according to any one of the first aspect and the possible implementations of the first aspect is performed, or the method according to any one of the second aspect and the possible implementations of the second aspect is performed.

According to an eighth aspect, a communication apparatus is provided, including a processor, configured to connect to a memory, and configured to invoke a program stored in the memory, to perform any possible method according to the first aspect or the second aspect. The memory may be located inside the communication apparatus, or may be located outside the communication apparatus. In addition, there are one or more processors.

In an implementation, the communication apparatus in the third aspect, the fourth aspect, or the fifth aspect may be a chip or a chip system.

According to a ninth aspect, a chip apparatus is provided, including a processor, configured to invoke a computer program or computer instructions in a memory, so that the processor performs any implementation of the first aspect or the second aspect.

Optionally, the processor is coupled to the memory through an interface.

According to a tenth aspect, a communication system is provided. The communication system includes a terminal device and a network device. The terminal device is configured to perform the method shown in the first aspect, and the network device is configured to perform the method shown in the second aspect.

For descriptions of beneficial effects of any one of the third aspect to the tenth aspect, refer to the descriptions of the beneficial effects of the first aspect or the second aspect.

### BRIEF DESCRIPTION OF DRAWINGS

FIG. 1 is a diagram of an architecture of a communication system applicable to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of still another communication method according to an embodiment of this application;
FIG. 5 is a schematic flowchart of yet another communication method according to an embodiment of this application;
FIG. 6 is a block diagram of a communication apparatus according to an embodiment of this application; and
FIG. 7 is a block diagram of another communication apparatus according to an embodiment of this application.

### DESCRIPTION OF EMBODIMENTS

The following describes technical solutions of this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th Generation, 6G) mobile communication system. The technical solutions provided in this application may be further applied to device-to-device (device-to-device, D2D) communication, machine-to-machine (machine-to-machine, M2M) communication, machine type communication (machine type communication, MTC), an internet of things (internet of things, IoT) communication system, or another communication system. This is not limited in this application.

With development of communication technologies, a communication system not only supports conventional communication, but also supports, for example, vehicle to everything (vehicle to everything, V2X) communication (which may also be referred to as internet of vehicles communication), vehicle to vehicle (vehicle to vehicle, V2V) communication (which may also be referred to as vehicle-to-vehicle communication), vehicle to infrastructure (vehicle to infrastructure, V2I) communication (which may also be referred to as vehicle-to-infrastructure communication), vehicle to pedestrian (vehicle to pedestrian, V2P) communication (which may also be referred to as vehicle-to-pedestrian communication), and vehicle to network (vehicle to network, V2N) communication (which may also be referred to as vehicle-to-network communication). For example, the communication system may further support a next generation wireless local area network system.

A terminal device in embodiments of this application may be briefly referred to as a terminal. The terminal device may be a device having a wireless transceiver function. The terminal device may be mobile or fixed. The terminal device may be deployed on land, where the deployment includes indoor or outdoor, or handheld or vehicle-mounted deployment, may be deployed on water (for example, on a ship), or may be deployed in air (for example, on aircraft, a balloon, or a satellite). The terminal device may include a mobile phone (mobile phone), a pad (pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal device in transportation safety (transportation safety), a wireless terminal device in a smart city (smart city), and/or a wireless terminal device in a smart home (smart home). Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, a vehicle-mounted device, a wearable device, a terminal device in a 5th generation (the 5th generation, 5G) network, a terminal device in a future evolved public land mobile network (public land mobile network, PLMN), or the like. The terminal device sometimes may also be referred to as user equipment (user equipment, UE), a mobile station (mobile station, MS), a mobile terminal (mobile terminal, MT), or the like. Optionally, the terminal device may communicate with a plurality of access network devices that use different technologies. For example, the terminal device may communicate with an access network device supporting LTE, may communicate with an access network device supporting 5G, or may be dual-connected to the access network device supporting LTE and the access network device supporting 5G. This is not limited in this application.

In this application, an apparatus configured to implement a function of the terminal device may be the terminal device, or may be an apparatus that can support the terminal device in implementing the function, for example, a chip system, a hardware circuit, a software module, or a combination of the hardware circuit and the software module. The apparatus may be mounted in the terminal device or may be used together with the terminal device. In the technical solutions provided in this application, an example in which the apparatus configured to implement the function of the terminal device is the terminal device and the terminal device is the UE is used to describe the technical solutions provided in this application.

A network device in embodiments of this application may also be referred to as an access network (radio access network, RAN) device.

The RAN device is a node or a device that connects the terminal device to a wireless network, and the RAN device may also be referred to as a base station. The RAN device includes, for example, but is not limited to: a base station, a next generation NodeB (generation NodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station, (for example, a home evolved NodeB or a home NodeB, HNB), a baseband unit (baseband unit, BBU), a transmitting and receiving point (transmitting and receiving point, TRP), a transmitting point (transmitting point, TP), and/or a mobile switching center. Alternatively, the access network device may be at least one of a central unit (central unit, CU), a distributed unit (distributed unit, DU), a central unit control plane (CU control plane, CU-CP) node, a central unit user plane (CU user plane, CU-UP) node, an integrated access and backhaul (integrated access and backhaul, IAB) node, a radio controller in a cloud radio access network (cloud radio access network, CRAN) scenario, or the like. Alternatively, the access network device may be a relay station, an access point, a vehicle-mounted device, a terminal device, a wearable device, an access network device in a 5G network, an access network device in a future evolved public land mobile network (public land mobile network, PLMN), or the like.

In this application, an apparatus configured to implement a function of the access network device may be the access network device, or may be an apparatus that can support the access network device in implementing the function, for example, a chip system, a hardware circuit, a software module, or a combination of the hardware circuit and the software module. The apparatus may be mounted in the access network device or may be used together with the access network device. In the technical solutions provided in this application, an example in which the apparatus configured to implement the function of the access network device is the access network device and the access network device is the base station is used to describe the technical solutions provided in this application.

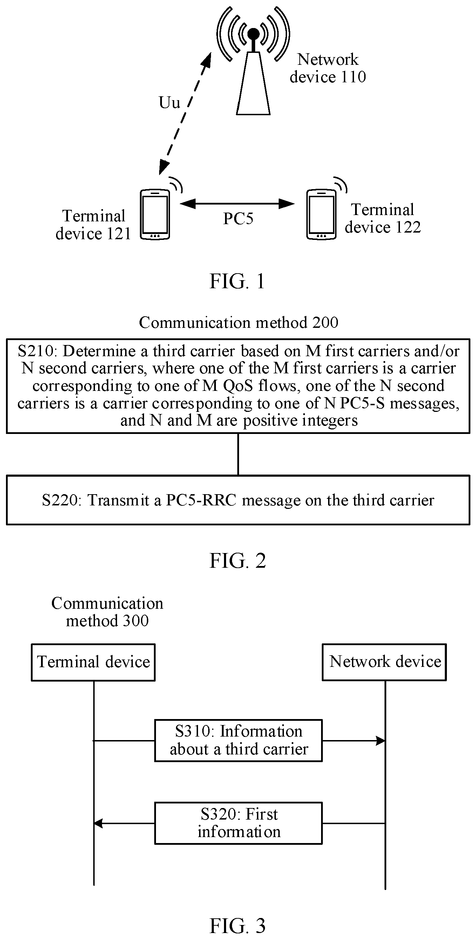

FIG. 1 is a diagram of an architecture of a communication system applicable to an embodiment of this application.

The communication system applicable to this embodiment of this application includes a terminal device, for example, a terminal device 121 and a terminal device 122 shown in FIG. 1, and a network device, for example, a network device 110 shown in FIG. 1. In addition, the communication system mainly includes two types of communication interfaces, for example, a communication interface (Uu interface) between the terminal device 121 and the network device 110 and a communication interface (PC5 interface) between the terminal device 121 and the terminal device 122. The Uu interface is used for communication between the terminal device and the network device, and the PC5 interface is used for sidelink communication between the terminal devices. A link used by the terminal device to send data to the network device on the Uu interface is referred to as an uplink (uplink), and a link used by the terminal device to receive data sent by the network device is referred to as a downlink (downlink). A link for data transmission between the terminal devices on the PC5 interface is referred to as an SL or a direct link. The sidelink is usually used in a scenario in which direct communication can be performed between devices, such as device to device (device to device, D2D). In this scenario, data transmission between the devices does not need to pass through the network device.

V2X communication may be considered as a case of D2D communication. For example, in the V2X, each vehicle may be considered as one terminal device, and data transmission between terminal devices may be directly performed through an SL without passing through a network device. In this way, a communication delay can be effectively reduced. Unicast, multicast, or broadcast may be supported on the sidelink.

On the Uu interface, one or both of data and radio resource control (radio resource control, RRC) signaling are transmitted between the terminal device and the network device via a radio bearer. A radio bearer used for data transmission is referred to as a data radio bearer (data radio bearer, DRB), and a bearer used for RRC signaling transmission is referred to as a signaling radio bearer (signaling radio bearer, SRB). A radio bearer includes a packet data convergence protocol (packet data convergence protocol, PDCP) entity and a radio link control (radio link control, RLC) bearer. One RLC bearer includes one RLC entity and a corresponding logical channel (logical channel, LCH). A configuration of the radio bearer is configurations of the PDCP entity, the RLC entity, and the LCH of the radio bearer. The configuration of the radio bearer needs to ensure a QoS requirement of a service transmitted via the radio bearer. On the Uu interface, the radio bearer is configured by the network device for the terminal device.

On the PC5 interface, one or both of data and signaling are also transmitted between the terminal devices via a radio bearer. The radio bearer on the PC5 interface may be referred to as a sidelink radio bearer (sidelink radio bearer, SLRB). In a long term evolution (long term evolution, LTE) V2X system, radio bearers on a PC5 interface are separately established by a transmit-end terminal device and a receive-end terminal device, and configurations of the radio bearers are predefined in a standard or determined by the transmit-end terminal device and the receive-end terminal device.

Each time the terminal device performs SL transmission, the terminal device needs to perform logical channel prioritization (logical channel prioritization, LCP), which specifically includes selecting a destination (destination) and selecting an LCH. Selecting the destination may be understood as selecting a specific terminal device or specific terminal devices to which SL transmission is performed. Selecting the LCH may be understood as selecting a specific LCH or specific LCHs whose data is to be transmitted.

The architecture shown in FIG. 1 that can be applied to this embodiment of this application is merely an example for description, and an architecture applicable to this embodiment of this application is not limited thereto. Any architecture that can implement functions of the foregoing devices is applicable to this embodiment of this application. In addition, in future communication, names of these interfaces such as the Uu interface or the PC5 interface may remain unchanged, or may be replaced by other names. This is not limited in this application.

It should be further understood that the foregoing names are defined merely for ease of distinguishing between different functions, and should not constitute any limitation on this application. This application does not exclude a possibility that another name is used in the 5G network and another future network. For example, in a 6G network, some or all of the foregoing devices may use terms in 5G, or may use other names or the like. Names of the interfaces between the devices in FIG. 1 are merely examples. During specific implementation, names of the interfaces may be other names. This is not specifically limited in this application. In addition, a name of a message (or signaling) transmitted between the foregoing devices is merely an example, and does not constitute any limitation on a function of the message.

For example, refer to FIG. 1. The terminal device 121 and the terminal device 122 perform sidelink communication. The terminal device 121 may be used as transmit-end user equipment (transmission user equipment, TX UE), and the terminal device 122 may be used as receive-end user equipment (reception user equipment, RX UE). The terminal device 121 may be in an in-coverage (in-coverage, IC) state or an out-of-coverage (out-of-coverage, OOC) state. When the terminal device 121 is in an RRC connected (RRC _connected) state, the terminal device 121 may obtain an SL resource (used for SL transmission) from the base station. In this case, this resource allocation mode is referred to as a base station scheduling mode (mode 1). Specifically, the network device 110 may schedule an SL resource for the terminal device 121 by using downlink control information (downlink control information, DCI), or configure an SL configured grant (configured grant, CG) for the terminal device 121 by using an RRC message.

When the terminal device 121 operates in an autonomous contention mode (mode 2) (for example, in an RRC connected state, an RRC inactive state (RRC _inactive), an RRC idle state (RRC _idle), or an OOC state), the terminal device 121 may receive a configuration of an SL resource pool from the network device 110, or obtain the configuration of the SL resource pool from a preconfiguration. Then, the terminal device 121 selects an SL resource from the SL resource pool for sending. For example, the terminal device 121 may randomly select an SL resource from the SL resource pool, or select an SL resource from the SL resource pool based on a result of sensing (sensing) or partial sensing (partial sensing).

The SLRB includes a data radio bearer (data radio bearer, DRB) used for data transmission, and may be referred to as an "SL-DRB". The SLRB further includes an SRB used for signaling transmission, and is referred to as an "SL-SRB". The SL-SRB may carry a PC5-RRC message and a PC5-S message.

For the PC5-RRC message, an SL-SRB3 is introduced for transmission of the PC5-RRC message, for example, a PC5-RRC data transmission (data transmission) message. The PC5-RRC message may be equivalent to the SL-SRB3. For example, determining an LCH of the PC5-RRC message may be understood as determining an LCH of the SL-SRB3.

For the PC5-S message, three SL-SRBs are introduced.

An SL-SRB0 is used for transmission of an unprotected PC5-S message (unprotected PC5-S message), namely, a PC5-S message before establishment of PC5-S security or a PC5-S message used for unicast connection establishment, for example, a direct communication request (direct communication request, DCR) message. The foregoing messages may be equivalent to the SL-SRB0.

An SL-SRB1 is used for transmission of a PC5-S message establishing PC5-S security (PC5-S message establishing PC5-S security), for example, a direct security mode command (direct security mode command) message and a direct security mode complete (direct security mode complete) message. The foregoing message may be equivalent to the SL-SRB1.

An SL-SRB2 is used for transmission of a protected PC5-S message (protected PC5-S message), namely, a PC5-S message after establishment of PC5-S security, for example, a direct communication accept (direct communication accept) message, a PC5-S link modification (link modification) message, or a PC5-S link maintenance (link maintenance) message. The foregoing messages may be equivalent to the SL-SRB2.

In addition, an SL-SRB4 is used for transmission of a discovery (discovery) message. The discovery message may be equivalent to the SL-SRB4.

However, the terminal device cannot properly determine a carrier used for transmission of the PC5-RRC message, and consequently SL communication quality deteriorates.

For example, in carrier aggregation (carrier aggregation, CA), resources of a plurality of frequency bands may be combined, and data transmission is performed simultaneously by using a plurality of carriers, to increase a bandwidth and a data transmission speed of a wireless network, expand communication coverage, and improve communication reliability. Because the terminal device cannot determine the carrier used for transmission of the PC5-RRC message, and the terminal device may only simply select a carrier for transmission, that is, select a legacy (legacy) carrier, an SL CA technology cannot be used, and consequently the SL communication quality deteriorates.

FIG. 2 is a schematic flowchart of a communication method 200 according to an embodiment of this application. According to the method 200, a terminal device can determine a carrier used for transmission of a PC5-RRC message, thereby improving SL communication quality. The following describes in detail some embodiments of the method 200 with reference to FIG. 2.

S210: Determine a third carrier based on M first carriers and/or N second carriers, where one of the M first carriers is a carrier corresponding to one of M QoS flows, one of the N second carriers is a carrier corresponding to one of N PC5-S messages, and M and N are positive integers.

S220: Transmit a PC5-RRC message on the third carrier.

S210 may also be understood as determining, based on the carrier corresponding to the QoS flow and/or the carrier corresponding to the PC5-S message, a carrier corresponding to the PC5-RRC message.

The M first carriers may be one or more first carriers, and the N second carriers may be one or more second carriers. When there is one first carrier, M is 1; or when there are a plurality of first carriers, M is a positive integer greater than or equal to 2. When there is one second carrier, N is 1; or when there are a plurality of second carriers, N is a positive integer greater than or equal to 2.

One first carrier may be understood as one carrier set (carrier set), and one carrier set includes one or more carriers. One first carrier may also be understood as one carrier list (carrier list), and one carrier list includes one or more carriers. In addition, one first carrier may include one or more carriers. One first carrier may also be understood as one carrier (carrier) or a plurality of carriers (carriers).

One second carrier may be understood as one carrier set, or may be understood as one carrier list. In addition, one second carrier may include one or more carriers. One second carrier may also be understood as one carrier (carrier) or a plurality of carriers (carriers).

The M first carriers may be indicated by an upper layer (upper layer) of a terminal device, and the N second carriers may be indicated by the upper layer of the terminal device. For example, the upper layer of the terminal device may indicate, to an access stratum (access stratum, AS), one or more carriers corresponding to each QoS flow and one or more carriers corresponding to the PC5-S message. In other words, the upper layer of the terminal device may indicate the M first carriers and the N second carriers to the AS layer. The upper layer may be a V2X layer, a PC5-S layer, a proximity-based services (proximity-based services, ProSe) layer, or the like. This is not limited in this application.

The M QoS flows or the N PC5-S messages may belong to a same unicast connection as the PC5-RRC message. Alternatively, the M QoS flows, the N PC5-S messages, and the PC5-RRC message may correspond to a same destination. It may be understood that the M first carriers may meet a requirement of the M QoS flows for unicast connection transmission, and the N second carriers may meet a requirement of the N PC5-S messages for unicast connection transmission. Therefore, the third carrier determined based on the M first carriers and the N second carriers may also meet a requirement for PC5-RRC unicast connection transmission. Therefore, according to the foregoing solution, the carrier for transmission of the PC5-RRC message can be more properly determined.

It should be noted that the PC5-S message may be understood as a DCR message, or may be understood as a direct security mode command message, a direct security mode complete message, a direct communication accept message, or another PC5-S message (for example, a PC5-S link modification message or a PC5-S link maintenance message). In other words, the PC5-S message may be understood as a PC5-S message used for unicast connection establishment (or a PC5-S message before establishment of PC5-S security), a PC5-S message used for establishing PC5-S security, a PC5-S message after establishment of PC5-S security, or a discovery message. In other words, the PC5-S message may be understood as an SL-SRB0, an SL-SRB1, an SL-SRB2, or an SL-SRB4. Carriers corresponding to different PC5-S messages (or referred to as different SL-SRBs) may be the same or may be different.

Therefore, the second carrier may be a carrier corresponding to the DCR message, the direct security mode command message, the direct security mode complete message, the direct communication accept message, or another PC5-S message. For example, the another PC5-S message may be the PC5-S link modification message, the PC5-S link maintenance message, or the like. In other words, the second carrier may be a carrier corresponding to the PC5-S message used for unicast connection establishment (or the PC5-S message before establishment of PC5-S security), the PC5-S message used for establishing PC5-S security, the PC5-S message after establishment of PC5-S security, or the discovery message. In other words, the second carrier may be a carrier corresponding to the SL-SRB0, the SL-SRB1, the SL-SRB2, or the SL-SRB4. Second carriers corresponding to different PC5-S messages (or referred to as different SL-SRBs) may be the same or may be different.

One third carrier may be understood as one carrier set, or may be understood as one carrier list. A plurality of third carriers may be understood as one carrier set, or may be understood as a plurality of carrier lists. In addition, one third carrier may include one or more carriers. One third carrier may also be understood as one carrier (carrier) or a plurality of carriers (carriers).

One third carrier may also be understood as one carrier, and a plurality of third carriers may also be understood as a plurality of carriers.

The third carrier may be understood as the carrier corresponding to the PC5-RRC message, or may be understood as a carrier corresponding to an SL-SRB3. In addition, determining the third carrier may be understood as determining a carrier corresponding to an LCH of the PC5-RRC message, or may be understood as determining a carrier corresponding to an LCH of the SL-SRB3. For another embodiment of S210, refer to the following descriptions. Details are not described herein.

When there are a plurality of third carriers, S220 may be understood as transmitting the PC5-RRC message on one of the third carriers.

According to the foregoing solution, the third carrier corresponding to the PC5-RRC message may be determined based on the first carrier and/or the second carrier. Because the first carrier corresponding to the PC5-S message and the second carrier corresponding to the QoS flow may meet a requirement of the terminal device for transmission, the third carrier determined based on the first carrier and/or the second carrier may meet a requirement of the terminal device for transmission of the PC5-RRC message. Therefore, according to the foregoing solution, the carrier used for transmission of the PC5-RRC message can be properly determined, thereby improving the SL communication quality.

S210 may be implemented in a plurality of manners. The following uses four manners as examples to describe some embodiments of S210 in detail.

Manner 1: The third carrier is a union set or an intersection set of K first carriers among the M first carriers, and 2≤K≤M.

A value of K may be understood as that K is greater than or equal to 2, and K is less than or equal to M. The following separately describes cases of different values of K.

K may be equal to M. For example, the upper layer indicates that three QoS flows respectively correspond to a carrier set 1, a carrier set 2, and a carrier set 3 (or referred to as a first carrier 1, a first carrier 2, and a first carrier 3). Each carrier set (or each first carrier) may include one or more carriers, and the third carrier may be a union set or an intersection set of the carrier set 1, the carrier set 2, and the carrier set 3.

For example, the carrier set 1 includes a carrier 11 and a carrier 12, the carrier set 2 includes the carrier 11 and a carrier 22, and the carrier set 3 includes the carrier 11 and a carrier 33. The third carrier may be the union set of the three carrier sets (or referred to as the three first carriers). That is, the third carrier includes the carrier 11, the carrier 12, the carrier 22, and the carrier 33. Alternatively, the third carrier may be the intersection set of the three carrier sets (or referred to as the three first carriers). That is, the third carrier includes the carrier 11.

K may be less than M. For example, the upper layer indicates that the three QoS flows respectively correspond to the foregoing carrier set 1, the carrier set 2, and the carrier set 3 (or referred to as the first carrier 1, the first carrier 2, and the first carrier 3). The third carrier may be a union set or an intersection set of the carrier set 1 and the carrier set 2.

For example, the third carrier may be the union set of the foregoing two carrier sets (or referred to as the two first carriers). That is, the third carrier includes the carrier 11, the carrier 12, and the carrier 22. Alternatively, the third carrier may be the intersection set of the foregoing two carrier sets (or referred to as the two first carriers). That is, the third carrier includes the carrier 11.

K is usually greater than or equal to 2, and the third carrier is a union set or an intersection set of a plurality of first carriers.

In addition, K may alternatively be 1. When K is 1, the third carrier is the first carrier. In other words, the third carrier is one of the M first carriers.

Manner 2: The third carrier is a union set or an intersection set of L second carriers among the N second carriers, and 2≤L≤N.

A value of L may be understood as that L is greater than or equal to 2, and L is less than or equal to N. The following separately describes cases of different values of L.

L may be equal to N. For example, the upper layer indicates that three PC5-S messages respectively correspond to a carrier set 1, a carrier set 2, and a carrier set 3 (or referred to as a second carrier 1, a second carrier 2, and a second carrier 3). Each carrier set (or each second carrier) may include one or more carriers, and the third carrier may be a union set or an intersection set of the carrier set 1, the carrier set 2, and the carrier set 3.

For example, the carrier set 1 includes a carrier 11 and a carrier 12, the carrier set 2 includes the carrier 11 and a carrier 22, and the carrier set 3 includes the carrier 11 and a carrier 33. The third carrier may be the union set of the three carrier sets (or referred to as three second carriers). That is, the third carrier includes the carrier 11, the carrier 12, the carrier 22, and the carrier 33. Alternatively, the third carrier may be the intersection set of the three carrier sets (or referred to as three second carriers). That is, the third carrier includes the carrier 11.

L may be less than N. For example, the upper layer indicates that the three PC5-S messages respectively correspond to the carrier set 1, the carrier set 2, and the carrier set 3 (or referred to as the second carrier 1, the second carrier 2, and the second carrier 3). The third carrier may be a union set or an intersection set of the carrier set 1 and the carrier set 2.

For example, the third carrier may be the union set of the foregoing two carrier sets (or referred to as the two second carriers). That is, the third carrier includes the carrier 11, the carrier 12, and the carrier 22. Alternatively, the third carrier may be the intersection set of the foregoing two carrier sets (or referred to as two second carriers). That is, the third carrier includes the carrier 11.

L is usually greater than or equal to 2, and the third carrier is a union set or an intersection set of a plurality of second carriers.

In addition, L may alternatively be 1. When L is 1, the third carrier is the second carrier. In other words, the third carrier is one of the N second carriers.

For understanding of the PC5-S message and the second carrier, refer to the foregoing descriptions. Details are not described herein.

Manner 3: The third carrier is a union set or an intersection set of K first carriers among the M first carriers and L second carriers among the N second carriers, K≤M, L≤N, and K and L are positive integers.

A value of K may be understood as that K is less than or equal to M. A value of L may be understood as that L is less than or equal to N.

When M is 1 and N is 1, K may be 1, and L may be 1. For example, the upper layer indicates that a QoS flow corresponds to a carrier set 1 (or referred to as a first carrier 1), and a PC5-S message corresponds to a carrier set 2 (or referred to as a second carrier 2). For example, the carrier set 1 includes a carrier 11 and a carrier 12, and the carrier set 2 includes the carrier 11 and a carrier 22. The third carrier may be a union set of the foregoing two carrier sets (or referred to as one first carrier and one second carrier). That is, the third carrier includes the carrier 11, the carrier 12, and the carrier 22. The third carrier may be an intersection set of the foregoing two carrier sets (or referred to as one first carrier and one second carrier). That is, the third carrier includes the carrier 11.

When M is 1 and N is an integer greater than or equal to 2, K may be 1, and L may be an integer less than or equal to N. For example, L may still be 1. This is similar to the foregoing solution in which K is 1 and L is 1. For details, refer to the foregoing descriptions. For another example, L may be 2. In this case, a QoS flow may correspond to a carrier set 1 (or referred to as a first carrier 1), and two PC5-S messages may respectively correspond to a carrier set 2 and a carrier set 3 (or referred to as a second carrier 2 and a second carrier 3 respectively). For example, the carrier set 1 includes a carrier 11 and a carrier 12, the carrier set 2 includes the carrier 11 and a carrier 22, and the carrier set 3 includes the carrier 11 and a carrier 33. The third carrier may be a union set of the foregoing three carrier sets (or referred to as one first carrier and two second carriers). That is, the third carrier includes the carrier 11, the carrier 12, the carrier 22, and the carrier 33. The third carrier may be an intersection set of the foregoing three carrier sets (or referred to as one first carrier and two second carriers). That is, the third carrier includes the carrier 11.

When M is an integer greater than or equal to 2 and N is 1, K may be an integer less than or equal to M, and L may be 1. For example, K may still be 1. This is similar to the foregoing solution in which K is 1 and L is 1. For details, refer to the foregoing descriptions. For another example, K may be 2. In this case, two QoS flows may respectively correspond to a carrier set 1 and a carrier set 2 (or referred to as a first carrier 1 and a first carrier 2 respectively), and a PC5-S message may correspond to a carrier set 3 (or referred to as a second carrier 3). For example, the carrier set 1 includes a carrier 11 and a carrier 12, the carrier set 2 includes the carrier 11 and a carrier 22, and the carrier set 3 includes the carrier 11 and a carrier 33. The third carrier may be a union set of the foregoing three carrier sets (or referred to as two first carriers and one second carrier). That is, the third carrier includes the carrier 11, the carrier 12, the carrier 22, and the carrier 33. The third carrier may be an intersection set of the foregoing three carrier sets (or referred to as two first carriers and one second carrier). That is, the third carrier includes the carrier 11.

When M is an integer greater than or equal to 2 and N is an integer greater than or equal to 2, K may be an integer less than or equal to M, and L may be an integer less than or equal to N. For example, K may be 1, and L may be 1; K may be 1, and L may be 2; or K may be 2, and L may be 1. The foregoing three examples are similar to the foregoing solutions. For details, refer to the foregoing descriptions. For another example, K may be 2, and L may be 2. In this case, two QoS flows may respectively correspond to a carrier set 1 and a carrier set 2 (or referred to as a first carrier 1 and a first carrier 2 respectively), and two PC5-S messages may respectively correspond to a carrier set 3 and a carrier set 4 (or referred to as a second carrier 3 and a second carrier 4 respectively). For example, the carrier set 1 includes a carrier 11 and a carrier 12, the carrier set 2 includes the carrier 11 and a carrier 22, the carrier set 3 includes the carrier 11 and a carrier 33, and the carrier set 4 includes the carrier 11 and a carrier 44. The third carrier may be a union set of the foregoing four carrier sets (or referred to as two first carriers and two second carriers). That is, the third carrier includes the carrier 11, the carrier 12, the carrier 22, the carrier 33, and the carrier 44. The third carrier may be an intersection set of the foregoing four carrier sets (or referred to as two first carriers and two second carriers). That is, the third carrier includes the carrier 11.

For a case in which K is greater than 2 and/or L is greater than 2, refer to the foregoing examples. Examples are not exhaustively listed herein. For understanding of the PC5-S message and the second carrier, refer to the foregoing descriptions. Details are not described herein.

According to the foregoing solution, the union set or the intersection set of the first carrier and/or the second carrier may be obtained, to determine the third carrier corresponding to the PC5-RRC message. Because the first carrier corresponding to the PC5-S message and the second carrier corresponding to the QoS flow may meet the requirement of the terminal device for transmission, the requirement of the terminal device for transmission of the PC5-RRC message may also be met based on the union set or the intersection set of the first carrier and/or the second carrier. Therefore, according to the foregoing solution, the carrier used for transmission of the PC5-RRC message can be properly determined, thereby improving the SL communication quality.

Manner 4: The third carrier is one of the M first carriers corresponding to a QoS flow that has a highest priority, a smallest PDB, or a smallest PER in the M QoS flows.

The highest priority may also be understood as a smallest priority value. For example, a carrier corresponding to a QoS flow that has a smallest logical channel priority (LCH priority) may be determined as the first carrier. It should be noted that the logical channel priority (LCH priority) herein may also be referred to as a logical channel priority (LCH priority), but is different from the foregoing LCP (LCH prioritization).

Further, the solution in Manner 4 may include: When priorities of a plurality of QoS flows in the M QoS flows are all the highest, the third carrier is one of the M first carriers corresponding to a QoS flow that has a smallest PDB or a smallest PER in the plurality of QoS flows that have the highest priority.

Alternatively, the solution in Manner 4 may include: When PDBs of a plurality of QoS flows in the M QoS flows are all the smallest, the third carrier is one of the M first carriers corresponding to a QoS flow that has a highest priority or a smallest PER in the plurality of QoS flows that have the smallest PDB.

Alternatively, the solution in Manner 4 may include: When PERs of a plurality of QoS flows in the M QoS flows are all the smallest, the third carrier is one of the M first carriers corresponding to a QoS flow that has a highest priority or a smallest PDB in the plurality of QoS flows that have the smallest PER.

The carrier corresponding to the QoS flow that has the highest priority, the smallest PDB, or the smallest PER is a carrier that can meet the requirement of the terminal device for transmission. Therefore, the third carrier can also meet the requirement of the terminal device for transmission of the PC5-RRC message. According to the foregoing solution, the carrier used for transmission of the PC5-RRC message is properly determined, thereby improving the SL communication quality.

In some embodiments, the third carrier is at least one of a carrier supported by a cell in which the terminal device is located, a carrier supported by the terminal device, or a carrier supported by a peer terminal device of the terminal device.

In other words, the third carrier is related to the first carrier and/or the second carrier, and is at least one of the carrier supported by the cell in which the terminal device is located, the carrier supported by the terminal device, or the carrier supported by the peer terminal device of the terminal device.

For example, after the intersection set or the union set of the first carrier and/or the second carrier is determined in the foregoing Manner 1 to Manner 3, a carrier that can be supported by the cell in which the terminal device is located, supported by the terminal device, or supported by the peer terminal device of the terminal device and that is in the intersection set or the union set may be further determined as the third carrier.

For another example, after the carrier corresponding to the QoS flow that has the highest priority, the smallest PDB, or the smallest PER is determined in the foregoing Manner 4, a carrier that can be supported by the cell in which the terminal device is located, supported by the terminal device, or supported by the peer terminal device of the terminal device and that is in the carrier may be further determined as the third carrier.

It may be understood that the carrier supported by the peer terminal device may be indicated by capability information of the peer terminal device. The peer terminal device may be a terminal device that receives the PC5-RRC message transmitted in S220, or another terminal device that establishes a unicast connection to the terminal device in the method 200 by using the PC5-S message.

According to the foregoing solution, the third carrier is at least one of the carrier supported by the cell in which the terminal device is located, the carrier supported by the terminal device, or the carrier supported by the peer terminal device of the terminal device. Therefore, the third carrier can meet the requirement of the terminal device for transmission of the PC5-RRC message. According to the foregoing solution, the carrier used for transmission of the PC5-RRC message is properly determined, thereby improving the SL communication quality.

It should be noted that the PC5-RRC message in S220 may alternatively be replaced with an SL medium access control control element (medium access control control element, MAC CE) or physical (physical, PHY) layer signaling. In other words, a transmission carrier of the SL MAC CE or the PHY layer signaling may be determined by using the same method. For example, after S210 and the embodiment related to S210 are performed, the SL MAC CE or the PHY layer signaling may be transmitted on the third carrier.

FIG. 3 is a schematic flowchart of another communication method 300 according to an embodiment of this application. FIG. 3 relates to interaction between a terminal device and a network device, and the method 300 is applicable to a terminal device in an RRC connected state. The method 300 may be combined with the foregoing method 200. For example, S310 and S320 may be performed after S210. For another example, S310 and S320 may be performed before S220.

S310: The terminal device reports information about a third carrier to the network device. Correspondingly, the network device receives the information about the third carrier from the terminal device, where the third carrier is related to M first carriers and/or N second carriers, one of the M first carriers is a carrier corresponding to one of M quality of service QoS flows, one of the N second carriers is a carrier corresponding to one of N PC5-S messages, and M and N are positive integers.

For example, the terminal device sends sidelink user equipment information (sidelink user equipment information, SUI) to the network device, and the information about the third carrier may be carried in the SUI. In other words, the SUI may include the information about the third carrier.

In some embodiments, the method 300 further includes: The terminal device reports second information to the network device, where the second information indicates that the information about the third carrier corresponds to a PC5-RRC message. Correspondingly, the network device receives the second information from the terminal device.

In an example, the second information may be carried in the information about the third carrier. In other words, the information about the third carrier may include the second information. The second information may indicate that the information about the third carrier is associated with the PC5-RRC message. In other words, the second information may indicate that the information about the third carrier is associated with an SL-SRB3. In this case, the second information is indication information in the information about the third carrier, and the indication information indicates that the information about the third carrier is associated with the PC5-RRC message/SL-SRB3.

In another example, the information about the third carrier may be carried in the second information, and a name of the second information may indicate the information about the third carrier.

For example, an original name of the second information is "sl-TxInterestedFreqList". When the second information includes the information about the third carrier, the name of the second information may be "sl-TxInterestedFreqList-RRC", to indicate that the information about the third carrier is associated with the PC5-RRC message, in other words, indicate that the information about the third carrier is associated with the SL-SRB3. In this case, the second information may be considered as an information element (information element, IE), and the IE includes the information about the third carrier. In other words, the second information is an information element name external to the information about the third carrier, and the information element name indicates that the information about the third carrier is associated with the PC5-RRC message/SL-SRB3.

For another example, when the terminal device reports information about the carrier corresponding to the QoS flow and the information about the third carrier, different information elements are used for indication. In this way, a name of an information element carrying the information about the carrier corresponding to the QoS flow may be changed, to distinguish between the information about the carrier corresponding to the QoS flow and the information about the third carrier. In this way, the network device can determine that the information about the carrier corresponding to the QoS flow is associated with the QoS flow, and the information about the third carrier is associated with the PC5-RRC message/SL-SRB3.

According to the foregoing solution, the network device may associate the information about the third carrier with the PC5-RRC message based on the second information reported by the terminal device, to help the network device configure a correct carrier for the terminal device, so that the terminal device can transmit the PC5-RRC message on the third carrier, thereby improving SL communication quality.

S320: The terminal device receives first information from the network device, where the first information corresponds to a fourth carrier, and the third carrier includes the fourth carrier. Correspondingly, the network device sends the first information to the terminal device, where the first information corresponds to the fourth carrier, the third carrier includes the fourth carrier, and the fourth carrier is used for transmission of the PC5-RRC message.

The first information may be understood as grant information or resource configuration information.

For example, the first information may be DCI. The first information may alternatively be carried in the DCI. In other words, the DCI may include the first information. For example, the first information may be SL configured grant (configured grant) information. The first information may alternatively be carried in the SL configured grant information. In other words, the SL configured grant information includes the first information.

The first information may correspond to the fourth carrier in a plurality of manners.

For example, the first information may carry or include an index of the fourth carrier (namely, a number of the fourth carrier). In this way, the first information may be understood as information carrying or including the fourth carrier. The terminal device may find the fourth carrier based on the index of the fourth carrier, and transmit the PC5-RRC message on the fourth carrier.

For another example, the first information may indicate some resources, and the resources are resources on the fourth carrier. In this way, the first information may be understood as resource configuration information, and the terminal device may transmit the PC5-RRC message on the resources, thereby implementing transmission of the PC5-RRC message on the fourth carrier.

For another example, the first information may indicate the terminal device to transmit the PC5-RRC message on the fourth carrier. In this way, the first information may be understood as indication information, where the indication information specifically indicates a behavior of the terminal device. Different from the foregoing solution in which the index of the fourth carrier is carried or included, the first information used as indication information needs to carry more bits, and the bits indicate that the terminal device specifically needs to transmit the PC5-RRC message on the fourth carrier. However, the index of the fourth carrier needs only a small quantity of bits, and a specific behavior of the terminal device is determined in another manner. For example, the specific behavior of the terminal device is specified in a protocol, or the specific behavior of the terminal device is indicated by other indication information.

According to the foregoing solution, the terminal device sends the information about the third carrier to the network device, to help the network device configure a correct carrier for the terminal device, so that the terminal device can transmit the PC5-RRC message on the third carrier, thereby improving the SL communication quality.

The method 300 is combined with the foregoing method 200. In this case, in some embodiments, S220 includes: transmitting the PC5-RRC message on the fourth carrier based on the first information.

The terminal device may transmit the PC5-RRC message on the fourth carrier based on the first information.

In some embodiments, when the terminal device selects an LCH for SL transmission, an LCH corresponding to the PC5-RRC message (or an LCH corresponding to the SL-SRB3) can be selected only when the fourth carrier corresponding to the first information is included in the third carrier, or only when the fourth carrier corresponding to the first information corresponds to the third carrier. The LCH corresponding to the PC5-RRC message is associated with the third carrier.

For example, the third carrier determined by the terminal device is a carrier 1, and the first information delivered by the network device corresponds to the carrier 1. The terminal device selects the carrier 1 to transmit the PC5-RRC message. If the first information delivered by the network device corresponds to a carrier 2, the terminal device does not select the carrier 2 to transmit the PC5-RRC message, because the carrier 2 does not correspond to the carrier 1.

For another example, the third carrier determined by the terminal device is a carrier set 1, and the first information delivered by the network device corresponds to a carrier set 2. The terminal device selects, only when a carrier belonging to the carrier set 1 exists in the carrier set 2, in other words, only when an intersection set of the carrier set 2 and the carrier set 1 is not an empty set, a carrier that exists in both the carrier set 1 and the carrier set 2 to transmit the PC5-RRC message. If a carrier belonging to the carrier set 1 does not exist in the carrier set 2, in other words, only if an intersection set of the carrier set 2 and the carrier set 1 is an empty set, the terminal device does not select a carrier in the carrier set 2 to transmit the PC5-RRC message.

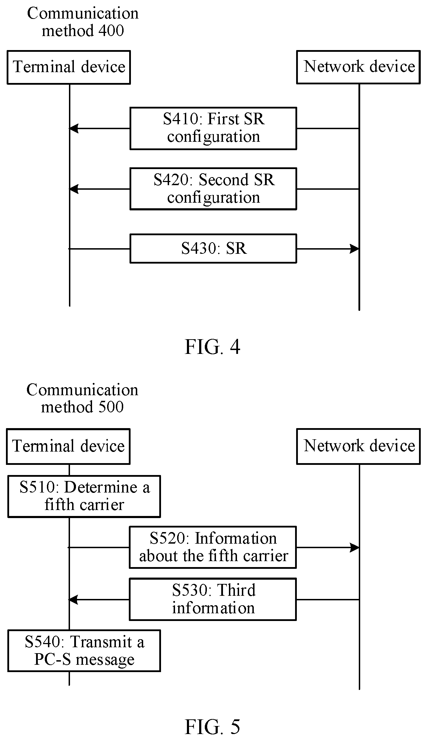

FIG. 4 is a schematic flowchart of still another communication method 400 according to an embodiment of this application. FIG. 4 relates to interaction between a terminal device and a network device, and the method 400 is applicable to a terminal device in an RRC connected state. The method 400 may be combined with the foregoing method 200 and/or the method 300, or the method 400 may be performed independently. For example, S430 may be performed after S210. For another example, S430 may be performed before S220. For still another example, S430 may be performed after S310. For yet another example, S430 may be performed before S320. The following describes in detail some embodiments of the method 400 with reference to FIG. 4.

S410: The terminal device receives a first SR configuration from the network device, where the first SR configuration is an SR configuration of a PC5-RRC message. Correspondingly, the network device sends the first SR configuration to the terminal device.

It should be noted that the first SR configuration in S410 includes first SR configuration information (schedulingRequestConfig) and/or first SR resource configuration information (SchedulingRequestResourceConfig). The first SR configuration information is SR configuration information of the PC5-RRC message, and the first SR resource configuration information is SR resource configuration information of the PC5-RRC message. To describe meanings of the SR configuration information and the SR resource configuration information more clearly, a meaning of an SR is first described. When the terminal device sends data to a peer terminal device, the terminal device may send a buffer status report (buffer status reporting, BSR) to the network device. The network device may know an amount of to-be-sent data based on the BSR. Therefore, the network device may determine, based on the amount of to-be-sent data in the BSR, a specific quantity of sidelink resources (SL grants) to be allocated to the terminal device. In this process, if there is currently no uplink resource (UL grant) that can be used to send the BSR, the terminal device first sends an SR to the network, to notify the network device that there is data that needs to be sent.

An uplink resource used to send the SR is referred to as an "SR resource", and the terminal device may send the SR to the network device by using the SR resource. Before the SR is sent, the network device may send SR configuration information to the terminal device, and the terminal device may determine, based on the SR configuration information, the SR resource used to send the SR. For example, the SR configuration information may include an SR identifier (schedulingRequestID), a prohibit timer for SR sending (SR-ProhibitTimer), a maximum quantity of SR retransmissions (SR-TransMax), and the like. The SR identifier may also be referred to as an "SR ID."

In addition to the SR configuration information, the network device may further configure SR resource configuration information for the terminal device at a transmit end. The SR resource configuration information may include the SR ID, an SR resource identifier (schedulingRequestResourceID), an SR periodicity, an offset in the periodicity (periodicityAndOffset), and the like.

That the first SR configuration is the SR configuration of the PC5-RRC message may be understood as that an SR sent by the terminal device based on the first SR configuration is an SR of the PC5-RRC message. The SR of the PC5-RRC message may be used to request the network device to deliver the first information. The first information corresponds to a fourth carrier used for transmission of the PC5-RRC message. That the first SR configuration is the SR configuration of the PC5-RRC message may also be understood as that the first SR configuration is an SR configuration corresponding to an SL-SRB3.

Similarly, that the first SR configuration information is the SR configuration information of the PC5-RRC message may be understood as that an SR sent by the terminal device based on the first SR configuration information is an SR of the PC5-RRC message, or may be understood as that the first SR configuration is SR configuration information corresponding to the SL-SRB3.

Similarly, that the first SR resource configuration information is the SR resource configuration information of the PC5-RRC message may be understood as that an SR sent by the terminal device based on the first SR resource configuration information is an SR of the PC5-RRC message, or may be understood as that the first SR resource configuration information is SR resource configuration information corresponding to the SL-SRB3.

In some embodiments, an SR ID in the first SR configuration is predefined in a protocol. In this way, the terminal device may determine the corresponding first SR configuration based on the SR ID predefined in the protocol.

In some other embodiments, the SR ID in the first SR configuration is indicated by the network device.

S420: The terminal device receives a second SR configuration from the network device, where the second SR configuration is an SR configuration of a PC5-S message, and the first SR configuration is different from the second SR configuration. Correspondingly, the network device sends the second SR configuration to the terminal device.

It should be noted that the second SR configuration in S420 includes second SR configuration information and/or second SR resource configuration information. The second SR configuration information is SR configuration information of the PC5-S message, and the second SR resource configuration information is SR resource configuration information of the PC5-S message.

That the second SR configuration is the SR configuration of the PC5-S message may be understood as that an SR sent by the terminal device based on the second SR configuration is an SR of the PC5-S message. The SR of the PC5-S message may be used to request the network device to deliver configuration information, and the configuration information corresponds to a carrier used for transmission of the PC5-S message. That the second SR configuration is the SR configuration of the PC5-S message may also be understood as that the second SR configuration is an SR configuration corresponding to an SL-SRB0, an SL-SRB1, an SL-SRB2, or an SL-SRB4.

Similarly, that the second SR configuration information is the SR configuration information of the PC5-S message may be understood as that an SR sent by the terminal device based on the second SR configuration information is an SR of the PC5-S message, or may be understood as that the second SR configuration is SR configuration information corresponding to the SL-SRB3.

Similarly, that the second SR resource configuration information is the SR resource configuration information of the PC5-S message may be understood as that an SR sent by the terminal device based on the second SR resource configuration information is an SR of the PC5-S message, or may be understood as that the second SR resource configuration information is SR resource configuration information corresponding to the SL-SRB3.

That the first SR configuration is different from the second SR configuration may be that the SR ID in the first SR configuration is different from an SR ID in the second SR configuration, or may be that other information included in the first SR configuration is different from other information included in the second SR configuration. For example, an SR resource identifier in the first SR configuration is different from an SR resource identifier in the second SR configuration.

That the SR ID in the first SR configuration is different from the SR ID inf the second SR configuration may be understood as that an SR ID in the SR configuration of the PC5-RRC message is different from an SR ID in the SR configuration of the PC5-S message, or may be understood as that an SR ID in the SR configuration corresponding to the SL-SRB3 is different from an SR ID in the SR configuration corresponding to the SL-SRB0/1/2/4.

In some embodiments, the SR ID in the second SR configuration is predefined in a protocol. In this way, the terminal device may determine the corresponding second SR configuration based on the SR ID predefined in the protocol.

In some other embodiments, the SR ID in the second SR configuration is indicated by the network device.

It should be noted that S410 and S420 may be performed at the same time, or may not be performed at the same time. The first SR configuration and the second SR configuration may be carried in a same message, or may be carried in different messages.

S430: The terminal device sends the SR to the network device based on the first SR configuration, where the SR is used to request the network device to deliver the first information. Correspondingly, the network device receives the SR from the terminal device based on the first SR configuration.

According to the foregoing solution, the SR configuration of the SL-SRB3 is different from an SR configuration of another SL-SRB, so that the network device can distinguish whether the SR is for requesting a resource to transmit the PC5-RRC message or for requesting a resource to transmit the PC5-S message. In this way, the network device can schedule transmission of the PC5-RRC message by using a correct carrier, thereby improving SL communication quality.

FIG. 5 is a schematic flowchart of yet another communication method 500 according to an embodiment of this application. The method 500 may be applicable to a terminal device in an RRC connected state. The method 500 may be combined with the method 200, the method 300, and/or the method 400, or the method 500 may be performed independently. The following describes in detail some embodiments of the method 500 with reference to FIG. 5.

S510: The terminal device determines a fifth carrier corresponding to a PC5-S message.

For example, an AS layer of the terminal device may obtain, from an upper layer, information about the fifth carrier corresponding to the PC5-S message. The terminal device determines the fifth carrier based on the information about the fifth carrier.

For a meaning of the PC5-S message, refer to the foregoing descriptions. Details are not described herein. In some embodiments, different PC5-S messages correspond to different fifth carriers. In other words, there may be one or more PC5-S in S510, and there may be a plurality of same or different PC5-S messages.

S520: The terminal device reports the information about the fifth carrier to a network device. Correspondingly, the network device receives the information about the fifth carrier from the terminal device.

For example, the terminal device may send SUI to the network device, and the information about the fifth carrier may be carried in the SUI. In other words, the SUI includes the information about the fifth carrier.

In some embodiments, different PC5-S messages correspond to different information about the fifth carrier.

In some embodiments, the method 500 further includes: The terminal device reports fourth information to the network device, where the fourth information indicates that the information about the fifth carrier corresponds to the PC5-S message. Correspondingly, the network device receives the fourth information from the terminal device.

In an example, the fourth information may be carried in the information about the fifth carrier. In other words, the information about the fifth carrier may include the fourth information. The fourth information may indicate that the information about the fifth carrier is associated with the PC5-S message. In other words, the fourth information may indicate that the information about the fifth carrier is associated with an SL-SRB0/1/2/4. In this case, the fourth information is fourth information in the information about the fifth carrier, and the fourth information indicates that the information about the fifth carrier is associated with the PC5-S message or the SL-SRB0/1/2/4.

For example, information about a fifth carrier corresponding to a PC5-S message used for unicast connection establishment (or a PC5-S message between PC5-S security establishment) is associated with the fourth information about the SL-SRB0. For another example, information about a fifth carrier corresponding to a PC5-S message used for establishing PC5-S security is associated with the fourth information about the SL-SRB1. For another example, information about a fifth carrier corresponding to a PC5-S message after establishment of PC5-S security is associated with the fourth information about the SL-SRB2. For another example, information about a fifth carrier corresponding to a discovery message is associated with the fourth information about the SL-SRB4.

In another example, the information about the fifth carrier may be carried in the fourth information, and a name of the fourth information may indicate the information about the fifth carrier. The fourth information may be considered as an information element, and the information element includes the information about the fifth carrier. In other words, the fourth information is an information element name external to the information about the fifth carrier, and the information element name indicates that the information about the fifth carrier is associated with the PC5-S message or the SL-SRB0/1/2/4.

In other words, different information about the fifth carrier is carried in information elements with different names. For example, the information about the fifth carrier corresponding to the PC5-S message used for unicast connection establishment (or a PC5-S message between PC5-S security establishment) is carried in an information element with a first name. For another example, the information about the fifth carrier corresponding to the PC5-S message used for establishing PC5-S security is carried in an information element with a second name. For another example, the information about the fifth carrier corresponding to the PC5-S message after establishment of PC5-S security is carried in an information element with a third name. For another example, the information about the fifth carrier corresponding to the discovery message is carried in an information element with a fourth name.

In some embodiments, information that is about a carrier corresponding to a QoS flow and that is reported by the terminal device to the network device is different from the information about the fifth carrier. In other words, the information that is about the carrier corresponding to the QoS flow and that is reported by the terminal device to the network device and the information about the fifth carrier are indicated by information elements with different names.

In some embodiments, the terminal device reports, to the network device, information about a third carrier corresponding to a PC5-RRC message/an SL-SRB3.

In some embodiments, any two of the information that is about the carrier corresponding to the QoS flow and that is reported by the terminal device to the network device, the information about the third carrier, and the information about the fifth carrier are different. In other words, any two of the information that is about the carrier corresponding to the QoS flow and that is reported by the terminal device to the network device, the information about the third carrier, and the information about the fifth carrier are indicated by the information elements with different names.

S530: The terminal device receives third information from the network device, where the third information corresponds to a sixth carrier, and the fifth carrier includes the sixth carrier.

The third information may be understood as grant information or resource configuration information.

For example, first information may be DCI. The first information may alternatively be carried in the DCI. In other words, the DCI may include the first information. For example, the first information may be SL configured grant (configured grant) information. The first information may alternatively be carried in the SL configured grant information. In other words, the SL configured grant information includes the first information.

The third information may correspond to the sixth carrier in a plurality of manners.

For example, the third information may carry or include an index of the sixth carrier (namely, a number of the sixth carrier). In this way, the third information may be understood as information carrying or including the sixth carrier. The terminal device may find the sixth carrier based on the index of the sixth carrier, and transmit the PC5-S message on the sixth carrier.

For another example, the third information may indicate some resources, and the resources are resources on the sixth carrier. In this way, the third information may be understood as resource configuration information, and the terminal device may transmit the PC5-S message on the resources, thereby implementing transmission of the PC5-S message on the sixth carrier.

For another example, the third information may indicate the terminal device to transmit the PC5-S message on the sixth carrier. In this way, the third information may be understood as indication information, where the indication information specifically indicates a behavior of the terminal device. Different from the foregoing solution in which the index of the sixth carrier is carried or included, the third information used as indication information needs to carry more bits, and the bits indicate that the terminal device specifically needs to transmit the PC5-S message on the sixth carrier. However, the index of the sixth carrier needs only a small quantity of bits, and a specific behavior of the terminal device is determined in another manner. For example, the specific behavior of the terminal device is specified in a protocol, or the specific behavior of the terminal device is indicated by other indication information.

S540: The terminal device transmits the PC5-S message on the sixth carrier.

In some embodiments, when the terminal device selects an LCH for SL transmission, an LCH corresponding to the PC5-S message (or an LCH corresponding to the SL-SRB0/1/2/4) can be selected only when the sixth carrier corresponding to the third information is included in the fifth carrier, or only when the sixth carrier corresponding to the third information corresponds to the fifth carrier.

For example, the sixth carrier determined by the terminal device is a carrier 1, and the third information delivered by the network device corresponds to the carrier 1. The terminal device selects the carrier 1 to transmit the PC5-S message. If the third information delivered by the network device corresponds to a carrier 2, the terminal device does not select the carrier 2 to transmit the PC5-S message, because the carrier 2 does not correspond to the carrier 1.

For another example, the sixth carrier determined by the terminal device is a carrier set 1, and the third information delivered by the network device corresponds to a carrier set 2. The terminal device selects, only when a carrier belonging to the carrier set 1 exists in the carrier set 2, in other words, only when an intersection set of the carrier set 2 and the carrier set 1 is not an empty set, a carrier that exists in both the carrier set 1 and the carrier set 2 to transmit the PC5-S message. If a carrier belonging to the carrier set 1 does not exist in the carrier set 2, in other words, only if an intersection set of the carrier set 2 and the carrier set 1 is an empty set, the terminal device does not select a carrier in the carrier set 2 to transmit the PC5-S message.

According to the foregoing solution, the terminal device sends the information about the third carrier to the network device, to help the network device configure a correct carrier for the terminal device, so that the terminal device can transmit the PC5-S message on the third carrier, thereby improving SL communication quality.

The following describes apparatus embodiments corresponding to the method embodiments of this application. The following merely briefly describes apparatuses. For specific implementation steps and details of the solutions, refer to the foregoing method embodiments.

To implement functions in the methods provided in this application, both a terminal device and a network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

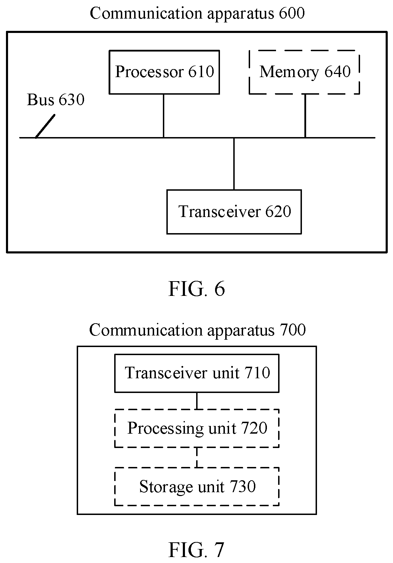

FIG. 6 is a block diagram of a communication apparatus 600 according to an embodiment of this application. The communication apparatus 600 includes a processor 610 and a transceiver 620. The processor 610 and the transceiver 620 may be connected to each other through a bus 630. The communication apparatus 600 may be a terminal device, or may be a network device.

Optionally, the communication apparatus 600 may further include a memory 640. The memory 640 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 640 is used for related instructions and data.

The processor 610 may be one or more central processing units (central processing units, CPUs). When the processor 610 is one CPU, the CPU may be a single-core CPU or a multi-core CPU. The processor 610 may be a signal processor, a chip, or another integrated circuit that can implement the method in this application, or a part of a circuit that is in the foregoing processor, chip, or integrated circuit and that is configured to perform a processing function. In addition, the transceiver 620 may also be referred to as an input/output interface or a communication interface. The transceiver 620 is configured to input or output a signal or data, or may be an input/output circuit.

When the communication apparatus 600 is the terminal device, for example, the communication apparatus 600 includes the processor 610 and the transceiver 620. The processor 610 is configured to determine a third carrier based on M first carriers and/or N second carriers, where one of the M first carriers is a carrier corresponding to one of M quality of service QoS flows, one of the N second carriers is a carrier corresponding to one of N PC5-S messages, and M and N are positive integers. The transceiver 620 is configured to transmit a PC5-radio resource control RRC message on the third carrier.

In some embodiments, the transceiver 620 is further configured to: report information about the third carrier to a network device, and receive first information from the network device, where the first information corresponds to a fourth carrier, and the third carrier includes the fourth carrier.

In some embodiments, the transceiver 620 is specifically configured to transmit the PC5-RRC message on the fourth carrier based on the first information.

In some embodiments, the transceiver 620 is further configured to report second information to the network device, where the second information indicates that the information about the third carrier corresponds to the PC5-RRC message.

In some embodiments, the transceiver 620 is further configured to: receive a first scheduling request SR configuration from the network device, where the first SR configuration is an SR configuration of the PC5-RRC message; receive a second SR configuration from the network device, where the second SR configuration is an SR configuration of the PC5-S message, and the first SR configuration is different from the second SR configuration; and send an SR to the network device based on the first SR configuration, where the SR is used to request the network device to deliver the first information.

When the communication apparatus 600 is the network device, for example, the communication apparatus 600 includes the transceiver 620. The transceiver 620 is configured to: receive information about a third carrier from a terminal device, where the third carrier is related to M first carriers and/or N second carriers, one of the M first carriers is a carrier corresponding to one of M quality of service QoS flows, one of the N second carriers is a carrier corresponding to one of N PC5-S messages, and M and N are positive integers; and send first information to the terminal device, where the first information corresponds to a fourth carrier, the third carrier includes the fourth carrier, and the fourth carrier is used to transmit a PC5-radio resource control RRC message.

In some embodiments, the transceiver 620 is further configured to receive second information from the terminal device, where the second information indicates that the information about the third carrier corresponds to the PC5-RRC message.

In some embodiments, the transceiver 620 is further configured to: send a first scheduling request SR configuration to the terminal device, where the first SR configuration is an SR configuration of the PC5-RRC message; send a second SR configuration to the terminal device, where the second SR configuration is an SR configuration of the PC5-S message, and the first SR configuration is different from the second SR configuration; and receive an SR from the terminal device based on the first SR configuration, where the SR is used to request to deliver the first information.

The foregoing descriptions are merely examples for description. For specific content, refer to content shown in the method embodiments. For implementation of each operation in FIG. 6, refer to corresponding descriptions in the method embodiments shown in FIG. 2 to FIG. 5.

FIG. 7 is a block diagram of another communication apparatus 700 according to an embodiment of this application. The communication apparatus 700 may be a terminal device or a network device, or may be a chip or a module in the terminal device or the network device, and is configured to implement the methods in the foregoing embodiments. The communication apparatus 700 includes a transceiver unit 710. The following describes the transceiver unit 710 by using an example.

The transceiver unit 710 may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. Unified descriptions are provided herein, and details are not described below again.

When the communication apparatus 700 is the terminal device, for example, the transceiver unit 710 is configured to report information about a third carrier and the like to a network device.

Optionally, the communication apparatus 700 may further include a processing unit 720, and the processing unit 720 is configured to perform content related to steps such as processing and coordination of the terminal device.

When the communication apparatus 700 is the network device, for example, the transceiver unit 710 is configured to receive information about a third carrier and the like from a terminal device.

Optionally, the communication apparatus 700 may further include a processing unit 720, and the processing unit 720 is configured to perform content related to steps such as processing and coordination of the network device.

The content is merely used as an example for description. When the communication apparatus 700 is the terminal device or the network device, the communication apparatus 700 is responsible for performing the methods or steps related to the terminal device or the network device in the foregoing method embodiments.

Optionally, the communication apparatus 700 further includes a storage unit 730. The storage unit 730 is configured to store a program or code used for performing the foregoing methods.

The apparatus embodiments shown in FIG. 6 and FIG. 7 are used to implement the content described in FIG. 2 to FIG. 5. For specific execution steps and methods of the apparatuses shown in FIG. 6 and FIG. 7, refer to the content described in the foregoing method embodiments.

This application further provides a chip, including a processor, configured to invoke instructions from a memory and run the instructions stored in the memory, to cause a communication apparatus on which the chip is mounted to perform the methods in the foregoing examples.

This application further provides another chip, including an input interface, an output interface, and a processor. The input interface, the output interface, and the processor are connected through an internal connection path. The processor is configured to execute code in a memory. When the code is executed, the processor is configured to perform the methods in the foregoing examples. Optionally, the chip further includes the memory. The memory is configured to store a computer program or the code.

This application further provides a processor, configured to be coupled to a memory, and configured to perform the method and the function related to the terminal device or the network device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or the part of the technical solutions may be implemented in a form of a software product. The computer software product is stored in a storage medium and includes several instructions for instructing a computer device (which may include a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining a third carrier based on M first carriers and/or N second carriers, wherein one of the M first carriers is a carrier corresponding to one of M quality of service QoS flows, one of the N second carriers is a carrier corresponding to one of N PC5-S messages, and M and N are positive integers; and
transmitting a PC5-radio resource control RRC message on the third carrier.

2. The method according to claim 1, wherein the M first carriers are indicated by an upper layer of a terminal device.

3. The method according to claim 2, wherein the upper layer comprises a vehicle to everything V2X layer, a PC5-S layer, or a proximity-based services ProSe layer.

4. The method according to any one of claims 1 to 3, wherein
the third carrier is a union set or an intersection set of K first carriers among the M first carriers, and 2≤K≤M;
the third carrier is a union set or an intersection set of L second carriers among the N second carriers, and 2≤L≤N; or
the third carrier is a union set or an intersection set of K first carriers among the M first carriers and L second carriers among the N second carriers, K≤M, L≤N, and K and L are positive integers.

5. The method according to any one of claims 1 to 3, wherein the third carrier is one of the M first carriers corresponding to a QoS flow that has a highest priority, a smallest packet delay budget, or a smallest packet error rate in the M QoS flows.

6. The method according to any one of claims 1 to 5, wherein the third carrier is at least one of a carrier supported by a cell in which the terminal device is located, a carrier supported by the terminal device, or a carrier supported by a peer terminal device of the terminal device.

7. The method according to any one of claims 1 to 6, further comprising:
reporting information about the third carrier to a network device; and
receiving first information from the network device, wherein the first information corresponds to a fourth carrier, and the third carrier comprises the fourth carrier.

8. The method according to claim 7, wherein the transmitting the PC5-RRC message on the third carrier comprises:
transmitting the PC5-RRC message on the fourth carrier based on the first information.

9. The method according to claim 7 or 8, further comprising:
reporting second information to the network device, wherein the second information indicates that the information about the third carrier corresponds to the PC5-RRC message.

10. The method according to any one of claims 7 to 9, further comprising:
receiving a first scheduling request SR configuration from the network device, wherein the first SR configuration is an SR configuration of a PC5-RRC message;
receiving a second SR configuration from the network device, wherein the second SR configuration is an SR configuration of a PC5-S message, and the first SR configuration is different from the second SR configuration; and
sending an SR to the network device based on the first SR configuration, wherein the SR is used to request the network device to deliver the first information.

11. A communication method, comprising:
receiving information about a third carrier from a terminal device, wherein the third carrier is related to M first carriers and/or N second carriers, one of the M first carriers is a carrier corresponding to one of M quality of service QoS flows, one of the N second carriers is a carrier corresponding to one of N PC5-S messages, and M and N are positive integers; and
sending first information to the terminal device, wherein the first information corresponds to a fourth carrier, the third carrier comprises the fourth carrier, and the fourth carrier is used to transmit a PC5-radio resource control RRC message.

12. The method according to claim 11, further comprising:
receiving second information from the terminal device, wherein the second information indicates that the information about the third carrier corresponds to the PC5-RRC message.

13. The method according to claim 11 or 12, further comprising:
sending a first scheduling request SR configuration to the terminal device, wherein the first SR configuration is an SR configuration of the PC5-RRC message;
sending a second SR configuration to the terminal device, wherein the second SR configuration is an SR configuration of the PC5-S message, and the first SR configuration is different from the second SR configuration; and
receiving an SR from the terminal device based on the first SR configuration, wherein the SR is used to request to deliver the first information.

14. A communication apparatus, comprising:
a processor, configured to determine a third carrier based on M first carriers and/or N second carriers, wherein one of the M first carriers is a carrier corresponding to one of M quality of service QoS flows, one of the N second carriers is a carrier corresponding to one of N PC5-S messages, and M and N are positive integers; and
a transceiver, configured to transmit a PC5-radio resource control RRC message on the third carrier.

15. The apparatus according to claim 14, wherein the M first carriers are indicated by an upper layer of a terminal device.

16. The apparatus according to claim 15, wherein the upper layer comprises a vehicle to everything V2X layer, a PC5-S layer, or a proximity-based services ProSe layer.

17. The apparatus according to any one of claims 14 to 16, wherein
the third carrier is a union set or an intersection set of K first carriers among the M first carriers, and 2≤K≤M;
the third carrier is a union set or an intersection set of L second carriers among the N second carriers, and 2≤L≤N; or
the third carrier is a union set or an intersection set of K first carriers among the M first carriers and L second carriers among the N second carriers, K≤M, L≤N, and K and L are positive integers.

18. The apparatus according to any one of claims 14 to 16, wherein the third carrier is one of the M first carriers corresponding to a QoS flow that has a highest priority, a smallest packet delay budget, or a smallest packet error rate in the M QoS flows.

19. The apparatus according to any one of claims 14 to 18, wherein the third carrier is at least one of a carrier supported by a cell in which the terminal device is located, a carrier supported by the terminal device, or a carrier supported by a peer terminal device of the terminal device.

20. The apparatus according to any one of claims 14 to 19, wherein the transceiver is further configured to:
report information about the third carrier to a network device, and receive first information from the network device, wherein the first information corresponds to a fourth carrier, and the third carrier comprises the fourth carrier.

21. The apparatus according to claim 20, wherein the transceiver is specifically configured to:
transmit the PC5-RRC message on the fourth carrier based on the first information.

22. The apparatus according to claim 20 or 21, wherein the transceiver is further configured to:
report second information to the network device, wherein the second information indicates that the information about the third carrier corresponds to the PC5-RRC message.

23. The apparatus according to any one of claims 20 to 22, wherein the transceiver is further configured to:
receive a first scheduling request SR configuration from the network device, wherein the first SR configuration is an SR configuration of the PC5-RRC message; receive a second SR configuration from the network device, wherein the second SR configuration is an SR configuration of the PC5-S message, and the first SR configuration is different from the second SR configuration; and send an SR to the network device based on the first SR configuration, wherein the SR is used to request the network device to deliver the first information.

24. A communication apparatus, comprising:
a transceiver, configured to: receive information about a third carrier from a terminal device, wherein the third carrier is related to M first carriers and/or N second carriers, one of the M first carriers is a carrier corresponding to one of M quality of service QoS flows, one of the N second carriers is a carrier corresponding to one of N PC5-S messages, and M and N are positive integers; and send first information to the terminal device, wherein the first information corresponds to a fourth carrier, the third carrier comprises the fourth carrier, and the fourth carrier is used to transmit a PC5-radio resource control RRC message.

25. The apparatus according to claim 24, wherein the transceiver is further configured to:
receive second information from the terminal device, wherein the second information indicates that the information about the third carrier corresponds to the PC5-RRC message.

26. The apparatus according to claim 24 or 25, wherein the transceiver is further configured to:
send a first scheduling request SR configuration to the terminal device, wherein the first SR configuration is an SR configuration of the PC5-RRC message; and
send a second SR configuration to the terminal device, wherein the second SR configuration is an SR configuration of the PC5-S message, and the first SR configuration is different from the second SR configuration; and receive an SR from the terminal device based on the first SR configuration, wherein the SR is used to request to deliver the first information.

27. A communication apparatus, comprising a processing circuit and an input/output interface, wherein the input/output interface is configured to input and/or output a signal; and the processing circuit is configured to perform the method according to any one of claims 1 to 10, or the processing circuit is configured to perform the method according to any one of claims 11 to 13.

28. A communication apparatus, comprising at least one module, wherein the at least one module is configured to perform the method according to any one of claims 1 to 10, or the at least one module is configured to perform the method according to any one of claims 11 to 13.

29. A computer-readable storage medium, wherein the computer-readable storage medium stores a computer program or instructions, and when the computer program or the instructions are run on a computer, the method according to any one of claims 1 to 10 is performed, or the method according to any one of claims 11 to 13 is performed.

30. A computer program product, comprising computer program code, wherein when the computer program code is run, the method according to any one of claims 1 to 10 is implemented, or the method according to any one of claims 11 to 13 is implemented.
